# FASCICULE DE BREVET EUROPEEN

(11) **EP 3 486 505 B1**
(45) Date de publication et mention de la délivrance du brevet: **11.03.2020**
(21) Numéro de dépôt: 18206343.8
(22) Date de dépôt: 14.11.2018
(51) Int. Cl.: F16B 33/00

(54) **PROCÉDÉ DE FIXATION D'AU MOINS DEUX PIÈCES ENTRE ELLES AU MOYEN D'UN ENSEMBLE DE FIXATION ET ENSEMBLE DE FIXATION ASSOCIÉ**
BEFESTIGUNGSVERFAHREN VON MINDESTENS ZWEI TEILEN UNTEREINANDER MITHILFE EINER BEFESTIGUNGSEINHEIT, UND ENTSPRECHENDE BEFESTIGUNGSEINHEIT
METHOD OF ATTACHING AT LEAST TWO PARTS TOGETHER BY AN ATTACHMENT ASSEMBLY AND ASSOCIATED ATTACHMENT ASSEMBLY

(30) Priorité: 15.11.2017 FR 1760752
(43) Date de publication de la demande: 22.05.2019
(73) Titulaire: ALSTOM Transport Technologies, 93400 Saint-Ouen (FR)
(72) Inventeur: HOYON, Christophe, 17170 Courcon D'Aunis (FR); LE-BAIL, Jean-François, 17220 Salles sûr Mer (FR)
(74) Mandataire: Lavoix

(56) Documents cités:
- WO-A1-2012/156271
- FR-A- 456 859
- US-A1- 2009 311 070

## Description

La présente invention concerne un procédé de fixation d'au moins deux pièces entre elles au moyen d'un ensemble de fixation. L'ensemble de fixation comprend au moins une vis comportant une tête, au moins un écrou apte à coopérer avec la vis, une plaque de blocage comprenant une partie supérieure, une partie inférieure et au moins un organe de liaison, l'organe de liaison reliant la partie supérieure et la partie inférieure, la partie supérieure, la partie inférieure et l'organe de liaison définissant au moins un logement de maintien apte à recevoir la tête de la vis ou l'écrou, la partie supérieure définissant au moins une ouverture supérieure traversante, l'ouverture supérieure étant agencée pour empêcher la rotation de la tête de la vis ou de l'écrou par rapport à l'ouverture supérieure, la partie inférieure définissant au moins une ouverture inférieure traversante, la partie inférieure comportant un organe d'immobilisation.

FR456859 décrit un tel ensemble de fixation et un procédé de fixation associé destiné à empêcher aux écrous des éclisses des rails de chemin fer de se desserrer sous l'effet des vibrations produites par le passage des trains.

Cependant, un tel procédé de fixation est long et fastidieux puisqu'il comprend notamment une étape de rabat d'une partie de la plaque de blocage au moyen d'un marteau et nécessite de maintenir la vis ou l'écrou pendant l'étape de boulonnage de l'écrou ou de la vis associé(e).

L'un des buts de l'invention est de pallier ces inconvénients en proposant un procédé de fixation simple au moyen d'un ensemble de fixation qui permette une fixation rapide des pièces entre elles.

A cet effet, le procédé de fixation comprend les étapes de la revendication 1.

Ainsi, la fixation des pièces est facilitée. En effet, l'écrou ou la vis est maintenu(e) durant l'étape de boulonnage et est ainsi empêché(e) de tout mouvement de rotation par rapport aux pièces à fixer. L'opération de boulonnage peut ainsi être réalisée facilement par un opérateur au moyen d'une seule main, sans qu'il soit nécessaire de maintenir la vis ou l'écrou associé(e). En outre, le procédé ne comprend pas d'étape supplémentaire pour assurer le blocage définitif de l'écrou ou de la vis.

L'invention concerne également un ensemble de fixation selon la revendication 2.

Selon des modes de réalisation différents, l'ensemble de fixation comprend en outre une ou plusieurs des caractéristiques des revendications 3 à 4, prises isolément ou selon toutes les combinaisons possible.

D'autres aspects et avantages de l'invention apparaitront à la lecture de la description qui suit, donnée à titre d'exemple et faite en référence aux dessins annexés parmi lesquels :
- la figure 1 est une représentation d'un ensemble de fixation selon un premier mode de réalisation non couvert par la présente invention, adapté pour fixer au moins deux pièces selon le procédé de l'invention ;
- la figure 2 est une section transversale de l'ensemble de fixation de la figure 1 ;
- la figure 3 est une représentation de la plaque de blocage de l'ensemble de fixation de la figure 1 ;
- la figure 4 est une représentation d'un deuxième mode de réalisation non couvert par la présente invention d'une plaque de blocage d'un ensemble de fixation adapté pour fixer au moins deux pièces ;
- la figure 5 est une représentation d'un ensemble de fixation selon un troisième mode de réalisation couvert par l'invention ;
- la figure 6 est une section transversale de l'ensemble de fixation de la figure 5 ;
- la figure 7 est une représentation d'un ensemble de fixation selon un quatrième mode de réalisation couvert par l'invention ;
- la figure 8 est une représentation d'une plaque de blocage de l'ensemble de fixation de la figure 7.

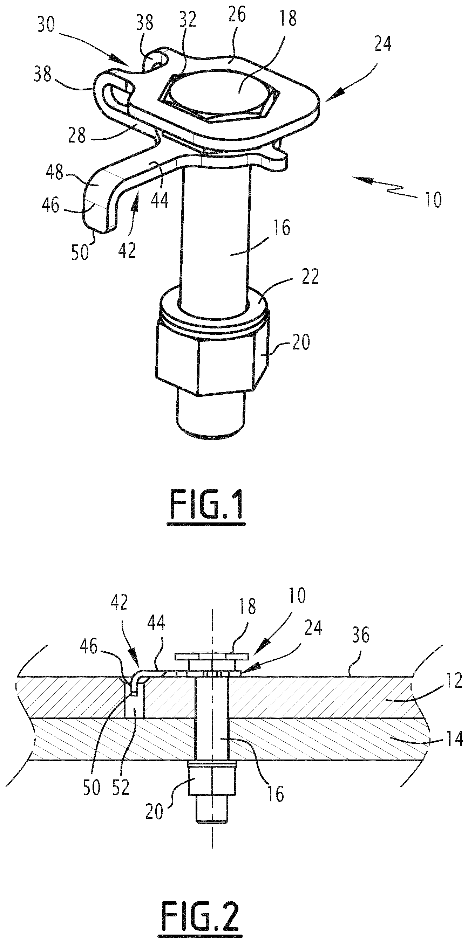

Un premier mode de réalisation non couvert par la présente invention d'un ensemble de fixation 10 adapté pour fixer au moins deux pièces 12, 14 est représenté sur les figures 1 à 3.

Les deux pièces 12, 14 sont par exemple deux plaques métalliques comme représentées sur la figure 2.

L'ensemble de fixation 10 comprend une vis 16 comportant une tête 18.

La tête 18 de la vis 16 peut avoir une forme quelconque. Par exemple, la tête 18 de la vis 16 a une forme hexagonale ou cylindrique.

La tête 18 de la vis 16 est par exemple pleine. Dans ce cas, la tête 18 de la vis 16 est apte à coopérer avec une clef complémentaire par entrainement externe, c'est-à-dire en emboîtant la clef autour de la tête.

En variante, la tête 18 comprend une empreinte. Dans ce cas, la tête 18 de la vis 16 est apte à coopérer avec un tournevis par entrainement interne, c'est-à-dire en emboîtant le tournevis dans l'empreinte.

Typiquement, la vis 16 comprend une tige filetée.

L'ensemble de fixation 10 comprend un écrou 20 apte à coopérer avec la vis 16.

Par exemple, l'écrou 20 et la tête 18 de la vis 16 ont un diamètre et une hauteur sensiblement similaires.

Comme visible sur les figures 1 et 2, l'écrou 20 comprend par exemple une rondelle 22 intégrée venue de matière.

L'ensemble de fixation 10 comprend en outre une plaque de blocage 24. La plaque de blocage 24 comprend une partie supérieure 26, une partie inférieure 28 et au moins un organe de liaison 30 reliant la partie supérieure 26 à la partie inférieure 28.

La partie supérieure 26 définit une ouverture supérieure 32 traversante.

L'ouverture supérieure 32 est agencée pour empêcher la rotation de la tête 18 de la vis 16 ou de l'écrou 20 par rapport à l'ouverture supérieure 32 lorsque la tête 18 ou l'écrou 20 s'étendent dans l'ouverture supérieure 32.

Par exemple, l'ouverture supérieure 32 a une forme complémentaire de la tête 18 de la vis 16 ou de l'écrou 20 comme visible sur la figure 1.

En variante, l'ouverture supérieure 32 a une forme circulaire ou polygonale.

La partie inférieure 28 définit une ouverture inférieure 34 traversante. Par exemple, l'ouverture inférieure 34 a une forme circulaire.

La partie inférieure 28 de la plaque de blocage 24 est en contact avec une paroi extérieure 36 de l'une des pièces 12 à fixer.

L'ouverture supérieure 32 et l'ouverture inférieure 34 sont sensiblement coaxiales.

La partie supérieure 26 et la partie inférieure 28 sont sensiblement parallèles entre elles.

L'organe de liaison 30 comprend deux portions de liaison 38 reliant la partie supérieure 26 et la partie inférieure 28. Par exemple, les portions de liaison 38 ont une forme de « C », dont les extrémités sont respectivement liées à la partie supérieure et à la partie inférieure.

En variante, l'organe de liaison 30 comprend une unique portion de liaison.

La partie supérieure 26, la partie inférieure 28 et l'organe de liaison 30 définissent un logement de maintien 40 apte à recevoir la tête 18 de la vis 16 ou l'écrou 20.

Avantageusement, la hauteur du logement de maintien 40 est inférieure ou sensiblement égale à la hauteur de la vis 16 et/ou de l'écrou 20.

Ainsi, la tête 18 de la vis 16 et/ou de l'écrou 20 est maintenue correctement à l'intérieur du logement de maintien 40 lors de l'étape de boulonnage.

La partie inférieure 28 de la plaque de blocage 24 comprend en outre un organe d'immobilisation 42.

L'organe d'immobilisation 42 s'étend en saillie de la partie inférieure 28.

L'organe d'immobilisation 42 est par exemple venu de matière avec la partie inférieure 28.

Avantageusement, l'organe d'immobilisation 42 comprend une première portion 44 s'étendant selon une première direction et une deuxième portion 46 s'étendant selon une deuxième direction formant un angle non nul avec la première direction.

Selon le mode de réalisation des figures 1 à 3, la première portion 44 s'étend dans un plan sensiblement confondu avec un plan de la partie inférieure 28.

En variante (non représentée), l'organe d'immobilisation 42 comprend une première portion s'étendant dans un plan sensiblement parallèle à un plan de la partie inférieure 28.

Comme visible sur les figures 1 à 3, la première direction et la deuxième direction forment par exemple sensiblement un angle droit.

La deuxième portion 46 est par exemple venue de matière avec la première portion 44. La deuxième portion 46 est par exemple formée par pliage.

La deuxième portion 46 comprend une première extrémité de liaison 48 avec la première portion 44 et une deuxième extrémité libre 50.

Typiquement la deuxième extrémité 50 est destinée à être insérée dans un orifice 52 défini dans l'une des pièces 12 à fixer, comme représenté sur la figure 2.

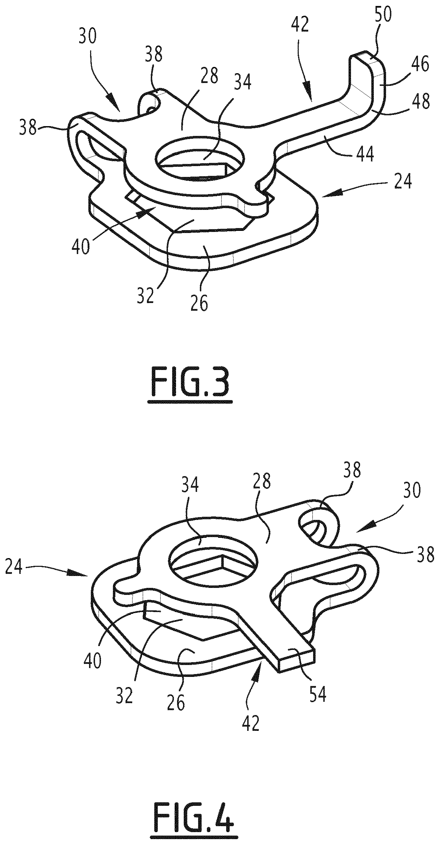

La figure 4 présente un deuxième mode de réalisation de la plaque de blocage 24. La plaque de blocage 24 et l'élément de fixation associé (non représenté) est similaire à ce qui a été décrit précédemment à l'exception de l'organe d'immobilisation 42.

L'organe d'immobilisation 42 comprend une unique portion 54 en saillie de la partie inférieure 28 s'étendant dans le plan de la partie inférieure 28.

L'organe d'immobilisation 42 est alors propre à venir en butée contre un obstacle (non représenté) fixé sur l'une des pièces à fixer ou contre un élément de l'environnement des pièces à fixer.

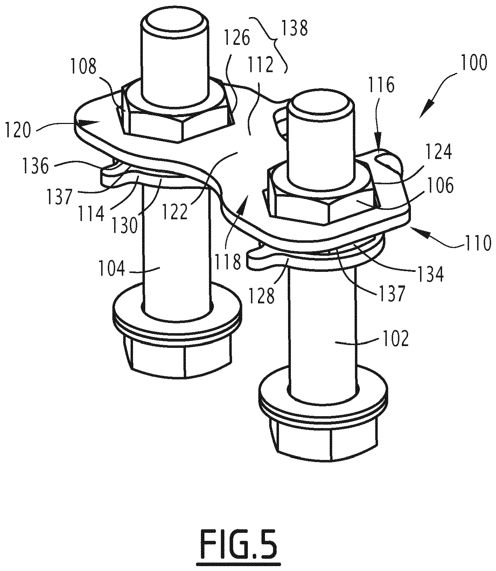

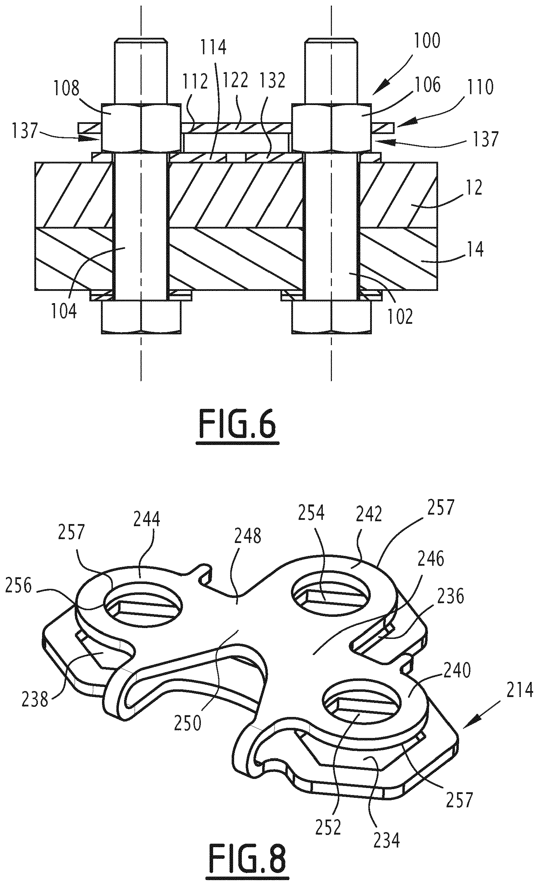

Un troisième mode de réalisation de l'ensemble de fixation 100 est représenté sur les figures 5 et 6.

L'ensemble de fixation 100 comprend les mêmes caractéristiques que les ensembles de fixation 10 des premier et deuxième modes de réalisation présentés plus haut, à l'exception caractéristiques décrites ci-dessous.

L'ensemble de fixation 100 comprend une première vis 102, une deuxième vis 104 et respectivement un premier écrou 106 et un deuxième écrou 108, apte à coopérer avec lesdites vis 102, 104.

L'ensemble de fixation 100 comprend une plaque de blocage 110 comportant une partie supérieure 112 et une partie inférieure 114 reliées par un organe de liaison 116.

La partie supérieure 112 de la plaque de blocage 110 comprend une première région 118 et une deuxième région 120 reliées par une portion de liaison 122.

La première région 118 et la deuxième région 120 définissent respectivement une première ouverture supérieure traversante 124 et une deuxième ouverture supérieure traversante 126, apte à recevoir respectivement la première vis 102 et la deuxième vis 104.

La première ouverture supérieure 124 et la deuxième ouverture supérieure 126 ont les mêmes caractéristiques que l'ouverture supérieure 32 des modes de réalisation décrits précédemment.

De la même manière, la partie inférieure 114 de la plaque de blocage 110 comprend une première région 128 et une deuxième région 130 reliées par une portion de liaison 132.

La première région 128 et la deuxième région 130 de la partie inférieure 114 de la plaque de blocage 110 définissent respectivement une première ouverture inférieure traversante 134 et une deuxième ouverture traversante inférieure 136, apte à recevoir respectivement la première vis 102 et la deuxième vis 104.

La première ouverture inférieure 134 et la deuxième ouverture inférieure 136 ont les mêmes caractéristiques que l'ouverture inférieure 34 des modes de réalisation décrits précédemment.

La partie supérieure 112, la partie inférieure 114 et l'organe de liaison 116 définissent deux logements de maintien 137 apte à recevoir la tête des vis 102, 104 ou les écrous 106, 108.

La plaque de blocage 110 comprend un organe d'immobilisation 138.

En considérant que la vis à fixer est la première vis 102, l'organe d'immobilisation 138 de l'ensemble de fixation 100 comprend alors les deuxièmes régions 120, 130 des parties supérieure 112 et inférieure 114 de la plaque de blocage 110, la deuxième vis 104 et le deuxième écrou 108.

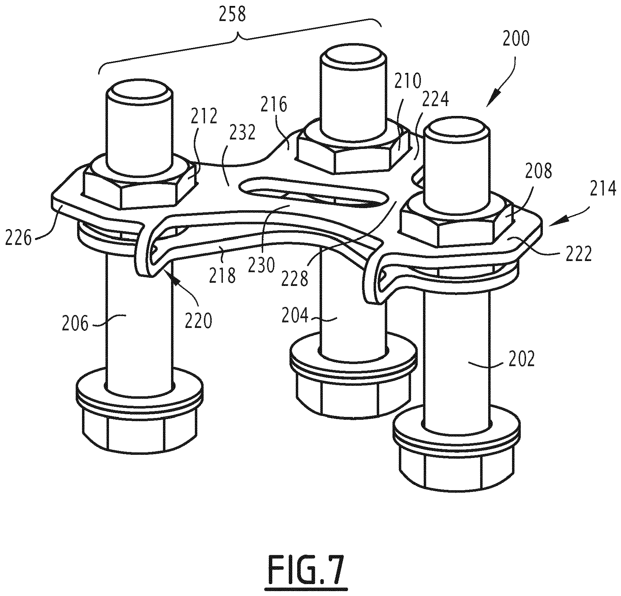

Les figures 7 et 8 représentent un quatrième mode de réalisation d'un ensemble de fixation 200 selon l'invention.

L'ensemble de fixation 200 comprend les mêmes caractéristiques que les ensembles de fixation 10, 100 présentés plus haut, à l'exception caractéristiques décrites ci-dessous.

L'ensemble de fixation 200 comprend une première vis 202, une deuxième vis 204, une troisième vis 206 et respectivement un premier écrou 208, un deuxième écrou 210 et un troisième écrou 212.

L'ensemble de fixation 200 comprend une plaque de blocage 214 comportant une partie supérieure 216 et une partie inférieure 218 reliées par un organe de liaison 220.

La partie supérieure 216 de la plaque de blocage 214 comprend une première région 222, une deuxième région 224 et une troisième région 226 reliées entre elles par une première portion de liaison 228, une deuxième portion de liaison 230 et une troisième portion de liaison 232.

La première région 222, la deuxième région 224 et la troisième région 226 définissent respectivement une première ouverture supérieure traversante 234, une deuxième ouverture supérieure traversante 236 et une troisième ouverture supérieure traversante 238 apte à recevoir respectivement la première vis 202, la deuxième vis 204 et la troisième vis 206.

La première ouverture supérieure 234, la deuxième ouverture supérieure 236 et la troisième ouverture supérieure 238 ont les mêmes caractéristiques que les ouvertures supérieures 32, 124, 126 des modes de réalisation décrits précédemment.

De la même manière, la partie inférieure 218 de la plaque de blocage 214 comprend une première région 240, une deuxième région 242 et une troisième région 244 reliées par une première portion de liaison 246, une deuxième portion de liaison 248 et une troisième portion de liaison 250.

La première région 240, la deuxième région 242 et la troisième région 244 de la partie inférieure 218 de la plaque de blocage 214 définissent respectivement une première ouverture inférieure 252, une deuxième ouverture inférieure 254 et une troisième ouverture inférieure 256 apte à recevoir respectivement la première vis 202, la deuxième vis 204 et la troisième vis 206.

La première ouverture inférieure 252, la deuxième ouverture inférieure 254 et la troisième ouverture inférieure 256 ont les mêmes caractéristiques que les ouvertures inférieures 34, 134, 136 des modes de réalisation décrits précédemment.

La partie supérieure 216, la partie inférieure 218 et l'organe de liaison 220 définissent deux logements de maintien 257 apte à recevoir la tête des vis 202, 204, 206 ou les écrous 208, 210, 212.

La plaque de blocage 214 comprend un organe d'immobilisation 258.

En considérant que la vis à fixer est la première vis 202, l'organe d'immobilisation 258 de l'ensemble de fixation 200 comprend alors la deuxième région 242 et/ou la troisième région 244 des parties supérieure 216 et inférieure 218 de la plaque de blocage 214, la deuxième vis 204 et/ou la troisième vis 206 et le deuxième écrou 210 et/ou le troisième écrou 212.

Le procédé de fixation d'au moins deux pièces 12, 14 entre elles au moyen d'un ensemble de fixation 10, 100, 200 selon l'invention va maintenant être décrit.

En référence au premier mode de réalisation de l'ensemble de fixation 10 (figures 1, 2 et 3), le procédé comprend une étape d'insertion de la vis 16 ou de l'écrou 20 dans le logement de maintien 40 de la plaque de blocage 24.

Le procédé comprend ensuite une étape d'immobilisation de la plaque de blocage 24 par rapport aux pièces 12, 14 à fixer au moyen de l'organe d'immobilisation 42.

L'étape d'immobilisation comprend une étape d'insertion de la deuxième portion 46 de l'organe d'immobilisation 42 dans un orifice 52 réalisé préalablement dans un des pièces 12 à fixer, par exemple par perçage manuel ou automatique.

La deuxième portion 46 de l'organe d'immobilisation 42 coopère avec l'orifice 52 de sorte à bloquer en rotation la plaque de blocage 24 et la tête 18 de la vis 16 ou l'écrou 20 par rapport aux pièces 12, 14 à fixer.

Le procédé comprend alors une étape de fixation des au moins de deux pièces 12, 14 par boulonnage manuel au moyen d'une clef ou d'un tournevis en fonction de la géométrie de la vis 16 ou de l'écrou 20.

L'étape de boulonnage est effectuée par l'opérateur au moyen d'une unique main, la plaque de blocage 24 empêchant à la tête 18 de la vis 16 ou à l'écrou 20 de tourner pendant cette étape, ce qui ne nécessite donc pas d'effectuer un maintien manuel de la vis ou de l'écrou.

En variante, selon le deuxième mode de réalisation représenté sur la figure 4, l'étape d'immobilisation comprend une mise en butée de l'organe d'immobilisation 42 contre un élément de butée (non représenté).

En référence au troisième et au quatrième modes de réalisation, l'étape d'immobilisation comprend une étape d'insertion d'au moins une vis 102, 104, 202, 204, 206 dans l'ouverture supérieure 124, 126, 234, 236, 238 et l'ouverture inférieure 134, 136, 252, 254, 256 correspondantes.

Le procédé comprend alors une étape de positionnement de la tête de la vis 102, 104, 202, 204, 206 dans le logement de maintien 137, 257.

Par exemple, toujours en référence aux troisième et quatrième modes de réalisations de l'ensemble de fixation 200, l'étape d'immobilisation comprend une étape d'insertion d'au moins une des deuxième vis 104, 204 et troisième vis 206 dans respectivement la deuxième ouverture supérieure 126, 236 et la deuxième ouverture inférieure 136, 254 ou dans la troisième ouverture supérieure 238 et la troisième ouverture inférieure 256.

En variante, pour le quatrième mode de réalisation, l'étape d'immobilisation comprend l'insertion des deuxième vis 204 et troisième vis 206 dans respectivement la deuxième ouverture supérieure 236 et la deuxième ouverture inférieure 254 et dans la troisième ouverture supérieure 238 et la troisième ouverture inférieure 256.

Ainsi, grâce au procédé de fixation selon l'invention et à l'ensemble de fixation associé 10, 100, 200, le maintien anti-rotation de la vis 16, 102, 202 ou de l'écrou 20, 106, 208 est assuré pendant l'étape de boulonnage par l'opérateur.

L'opération de boulonnage est facilitée car elle peut être effectuée au moyen d'une unique main par l'opérateur sans nécessiter une opération supplémentaire ou l'utilisation d'un outil supplémentaire. Les opérations de fixation sont par conséquent plus rapides.

La plaque de blocage 24, 110, 214 est particulièrement avantageuse car elle permet de bloquer invariablement l'écrou 20, 106, 208 ou la tête de la vis 16, 102, 202 pendant l'étape de boulonnage.

L'utilisation d'un ensemble de fixation 10, 100, 200 selon l'invention garantit également la présence d'une rondelle.

Par ailleurs, les vis 16, 102, 104, 202, 204, 206 et les écrous 20, 106, 108, 208, 210, 212 utilisés sont des pièces standards du commerce. La maintenance, par exemple le remplacement de ces pièces, est donc réalisée simplement pour un coût limité.

## Revendications

1. Procédé de fixation d'au moins deux pièces (12, 14) entre elles au moyen d'un ensemble de fixation (100, 200), ledit ensemble comprenant :
- au moins deux vis (102, 104, 202, 204, 206) comportant chacune une tête,
- au moins deux écrous (106, 108, 208, 210, 212) aptes à coopérer avec les vis (102, 104, 202, 204, 206),
- une plaque de blocage (110, 214) comprenant une partie supérieure (112, 216), une partie inférieure (114, 218) et au moins un organe de liaison (116, 220), l'organe de liaison (116, 220) reliant la partie supérieure (112, 216) et la partie inférieure (114, 218),
la partie supérieure (112, 216), la partie inférieure (114, 218) et l'organe de liaison (116, 220) définissant au moins deux logements de maintien (137, 257) aptes à recevoir la tête des vis (102, 104, 202, 204, 206) ou les écrous (106, 108, 208, 210, 212),
la partie supérieure (112, 216) définissant au moins deux ouvertures supérieures traversantes (124, 126, 234, 236, 238), chaque ouverture supérieure (124, 126, 234, 236, 238) étant agencée pour empêcher la rotation de la tête de la vis (102, 104, 202, 204, 206) ou de l'écrou (106, 108, 208, 210, 212) par rapport à l'ouverture supérieure (124, 126, 234, 236, 238), la partie inférieure (114, 218) définissant au moins deux ouvertures inférieures traversantes (134, 136, 252, 254, 256),
la partie inférieure (114, 218) comportant un organe d'immobilisation (138, 258),
le procédé comprenant les étapes :
- insertion de la tête d'une des vis (102, 104, 202, 204, 206) ou d'un des écrous (106, 108, 208, 210, 212) dans un des logements de maintien (137, 257) de la plaque de blocage (110, 214),
- immobilisation de la plaque de blocage (110, 214) par rapport aux au moins deux pièces (12, 14) au moyen de l'organe d'immobilisation (138, 258), en insérant au moins une vis (102, 104, 202, 204, 206) dans une ouverture supérieure (124, 126, 234, 236, 238) et une ouverture inférieure (134, 136, 252, 254, 256) et
- fixation des au moins deux pièces (12, 14) par boulonnage.

2. Ensemble de fixation (100, 200) adapté pour fixer au moins deux pièces (12, 14) selon le procédé de la revendication 1, l'ensemble de fixation (100, 200) comprenant :
- au moins deux vis (102, 104, 202, 204, 206) comportant chacune une tête (18),
- au moins deux écrous (106, 108, 208, 210, 212) aptes à coopérer avec les vis (102, 104, 202, 204, 206),
- une plaque de blocage (110, 214) comprenant une partie supérieure (112, 216), une partie inférieure (114, 218) et au moins un organe de liaison (116, 220), l'organe de liaison (116, 220) reliant la partie supérieure (112, 216) et la partie inférieure (114, 218),
la partie supérieure (112, 216), la partie inférieure (114, 218) et l'organe de liaison (116, 220) définissant au moins deux logements de maintien (137, 257) aptes à recevoir la tête des vis (102, 104, 202, 204, 206) ou les écrous (106, 108, 208, 210, 212),
la partie supérieure (26, 112, 216) définissant au moins deux ouvertures supérieures traversantes (124, 126, 234, 236, 238), chaque ouverture supérieure (124, 126, 234, 236, 238) étant agencée pour empêcher la rotation de la tête de la vis (102, 104, 202, 204, 206) ou de l'écrou (106, 108, 208, 210, 212) par rapport à l'ouverture supérieure (124, 126, 234, 236, 238), la partie inférieure (114, 218) définissant au moins deux ouvertures inférieures traversantes (134, 136, 252, 254, 256),
la partie inférieure (114, 218) comportant un organe d'immobilisation (138, 258).

3. Ensemble de fixation (100, 200) selon la revendication 2, dans lequel l'ouverture supérieure (124, 126, 234, 236, 238) est complémentaire de la tête de la vis (102, 104, 202, 204, 206) et/ou de l'écrou (106, 108, 208, 210, 212).

4. Ensemble de fixation (100, 200) selon la revendication 2 ou 3, dans lequel la partie supérieure (112, 216) et la partie inférieure (114, 218) de la plaque de blocage (110, 214) sont sensiblement parallèles entre elles.

## Patentansprüche

1. Verfahren zum aneinander Befestigen wenigstens zweier Stücke (12, 14) mittels einer Befestigungseinrichtung (100, 200), wobei die Einrichtung aufweist:
- wenigstens zwei Schrauben (102, 104, 202, 204, 206), die jeweils einen Kopf aufweisen,
- wenigstens zwei Muttern (106, 108, 208, 210, 212), die imstande sind, mit den Schrauben (102, 104, 202, 204, 206) zusammenzuwirken,
- eine Sperrplatte (110, 214), die einen oberen Abschnitt (112, 216), einen unteren Abschnitt (114, 218) und wenigstens ein Verbindungsorgan (116, 220) aufweist, wobei das Verbindungsorgan (116, 220) den oberen Abschnitt (112, 216) und den unteren Abschnitt (114, 218) verbindet,
wobei der obere Abschnitt (112, 216), der untere Abschnitt (114, 218) und das Verbindungsorgan (116, 220) wenigstens zwei Halteaufnahmen (137, 257) definieren, die imstande sind, die Köpfe der Schrauben (102, 104, 202, 204, 206) oder die Muttern (106, 108, 208, 210, 212) aufzunehmen,
wobei der obere Abschnitt (112, 216) wenigstens zwei obere Durchgangsöffnungen (124, 126, 234, 235, 238) definiert, wobei jede obere Öffnung (124, 126, 234, 236, 238) angeordnet ist zum Verhindern der Drehung des Kopfes der Schraube (102, 104, 202, 204, 206) oder der Mutter (106, 108, 208, 210, 212) bezüglich der oberen Öffnung (124, 126, 234, 236, 238), wobei der untere Abschnitt (114, 218) wenigstens zwei untere Durchgangsöffnungen (134, 136, 252, 254, 256) definiert, wobei der untere Abschnitt (114, 218) ein Immobilisierungsorgan (138, 258) aufweist,
wobei das Verfahren die Schritte aufweist:
- Einsetzen des Kopfs einer der Schrauben (102, 104, 202, 204, 206) oder einer der Muttern (106, 108, 208, 210, 212) in eine der Halteaufnahmen (137, 257) der Sperrplatte (110, 214),
- Immobilisieren der Sperrplatte (110, 214) bezüglich der wenigstens zwei Stücke (12, 14) mittels des Immobilisierungsorgans (138, 258) durch Einsetzen wenigstens einer Schraube (102, 104, 202, 204, 206) in eine obere Öffnung (124, 126, 234, 236, 238) und eine untere Öffnung (134, 136, 252, 254, 256) und
- Fixieren der wenigstens zwei Stücke (12, 14) via Bolzenverbinden.

2. Befestigungseinrichtung (100, 200), die angepasst ist zum Befestigen wenigstens zweier Stücke (12, 14) gemäß dem Verfahren von Anspruch 1, wobei die Befestigungseinrichtung (100, 200) aufweist:
- wenigstens zwei Schrauben (102, 104, 202, 204, 206), die jeweils einen Kopf (18) aufweisen,
- wenigstens zwei Muttern (106, 108, 208, 210, 212), die imstande sind, mit den Schrauben (102, 104, 202, 204, 206) zusammenzuwirken,
- eine Sperrplatte (110, 214), die einen oberen Abschnitt (112, 216), einen unteren Abschnitt (114, 218) und wenigstens ein Verbindungsorgan (116, 220) aufweist, wobei das Verbindungsorgan (116, 220) den oberen Abschnitt (112, 216) und den unteren Abschnitt (114, 218) verbindet,
wobei der obere Abschnitt (112, 216), der untere Abschnitt (114, 218) und das Verbindungsorgan (116, 220) wenigstens zwei Halteaufnahmen (137, 257) definieren, die imstande sind, die Köpfe der Schrauben (102, 104, 202, 204, 206) oder die Muttern (106, 108, 208, 210, 212) aufzunehmen,
wobei der obere Abschnitt (26, 112, 216) wenigstens zwei obere Durchgangsöffnungen (124, 126, 234, 236, 238) definiert, wobei jede obere Öffnung (124, 126, 234, 236, 238) angeordnet ist zum Verhindern der Drehung des Kopfes der Schraube (102, 104, 202, 204, 206) oder der Mutter (106, 108, 208, 210, 212) bezüglich der oberen Öffnung (124, 126, 234, 236, 238), wobei der untere Abschnitt (114, 218) wenigstens zwei untere Durchgangsöffnungen (134, 136, 252, 254, 256) definiert, wobei der untere Abschnitt (114, 218) ein Immobilisierungsorgan (138, 258) aufweist.

3. Befestigungseinrichtung (100, 200) gemäß Anspruch 2, wobei die obere Öffnung (124, 126, 234, 236, 238) zu dem Kopf der Schraube (102, 104, 202, 204, 206) und/oder zu der Mutter (106, 108, 208, 210, 212) komplementär ist.

4. Befestigungseinrichtung (100, 200) gemäß Anspruch 2 oder 3, wobei der obere Abschnitt (112, 216) und der untere Abschnitt (114, 218) der Sperrplatte (110, 214) im Wesentlichen parallel zueinander sind.

## Claims

1. Method for fixing at least two parts (12, 14) to each other by means of a fixing assembly (100, 200), said assembly comprising:
- at least two screws (102, 104, 202, 204, 206), each comprising a head,
- at least two nuts (106, 108, 208, 210, 212) able to cooperate with the screws (102, 104, 202, 204, 206),
- a locking plate (110, 214), comprising an upper part (112, 216), a lower part (114, 218) and at least one linkage member (116, 220), the linkage member (116, 220) connecting the upper part (112, 216) and the lower part (114, 218),
the upper part (112, 216), the lower part (114, 218) and the linkage member (116, 220) defining at least two retaining housings (137, 257) able to receive the head of the screws (102, 104, 202, 204, 206) or the nuts (106, 108, 208, 210, 212),
the upper part (112, 216) defining at least two traversing upper openings (124, 126, 234, 236, 238), each upper opening (124, 126, 234, 236, 238) being provided to prevent the rotation of the head of the screw (102, 104, 202, 204, 206) or of the nut (106, 108, 208, 210, 212) relative to the upper opening (124, 126, 234, 236, 238), the lower part (114, 218) defining at least two traversing lower openings (134, 136, 252, 254, 256),
the lower part (114, 218) comprising an immobilisation member (138, 258),
the method comprising the steps:
- insertion of the head of one of the screws (102, 104, 202, 204, 206) or of one of the nuts (106, 108, 208, 210, 212) in one of the retaining housings (137, 257) of the locking plate (110, 214),
- immobilisation of the locking plate (110, 214) relative to the at least two parts (12, 14) by means of the immobilisation member (138, 258), by inserting at least one screw (102, 104, 202, 204, 206) in an upper opening (124, 126, 234, 236, 238) and a lower opening (134, 136, 252, 254, 256) and
- fixing the at least two parts (12, 14) by bolting together.

2. Fixing assembly (100, 200) adapted to fix at least two parts (12, 14) according to the method of claim 1, the fixing assembly (100, 200) comprising:
- at least two screws (102, 104, 202, 204, 206), each comprising a head (18),
- at least two nuts (106, 108, 208, 210, 212) able to cooperate with the screws (102, 104, 202, 204, 206),
- a locking plate (110, 214), comprising an upper part (112, 216), a lower part (114, 218) and at least one linkage member (116, 220), the linkage member (116, 220) connecting the upper part (112, 216) and the lower part (114, 218),
the upper part (112, 216), the lower part (114, 218) and the linkage member (116, 220) defining at least two retaining housings (137, 257) able to receive the head of the screws (102, 104, 202, 204, 206) or the nuts (106, 108, 208, 210, 212),
the upper part (26, 112, 216) defining at least two traversing upper openings (124, 126, 234, 236, 238), each upper opening (124, 126, 234, 236, 238) being provided to prevent the rotation of the head of the screw (102, 104, 202, 204, 206) or of the nut (106, 108, 208, 210, 212) relative to the upper opening (124, 126, 234, 236, 238), the lower part (114, 218) defining at least two traversing lower openings (134, 136, 252, 254, 256),
the lower part (114, 218) comprising an immobilisation member (138, 258).

3. Fixing assembly (100, 200) according to claim 2, in which the upper opening (124, 126, 234, 236, 238) is complementary to the head of the screw (102, 104, 202, 204, 206) and/or to the nut (106, 108, 208, 210, 212).

4. Fixing assembly (100, 200) according to claim 2 or 3, in which the upper part (112, 216) and the lower part (114, 218) of the locking plate (110, 214) are substantially parallel to each other.
